(19) Europäisches Patentamt
European Patent Office
Office européen des brevets

(11) EP 1 811 516 A1

(12) **EUROPEAN PATENT APPLICATION**
published in accordance with Art. 158(3) EPC

(43) Date of publication:
**25.07.2007 Bulletin 2007/30**

(21) Application number: **05795795.3**

(22) Date of filing: **18.10.2005**

(51) Int Cl.:
***G11B 7/24*** *(2006.01)* ***G11B 7/0045*** *(2006.01)*
***G11B 7/007*** *(2006.01)* ***G11B 7/125*** *(2006.01)*
***G11B 7/26*** *(2006.01)*

(86) International application number:
**PCT/JP2005/019117**

(87) International publication number:
**WO 2006/043548 (27.04.2006 Gazette 2006/17)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.10.2004 JP 2004303881**

(71) Applicant: **FUJIFILM Corporation**
**Minato-ku**
**Tokyo 106-8620 (JP)**

(72) Inventors:
- **IMAI, Takashi,**
**FUJI FILM Corporation**
**Odawara-shi, Kanagawa 250-0001 (JP)**
- **USAMI, Yoshihisa,**
**FUJI PHOTO FILM Corporation**
**Odawara-shi, Kanagawa 250-0001 (JP)**

(74) Representative: **HOFFMANN EITLE**
**Patent- und Rechtsanwälte**
**Arabellastrasse 4**
**81925 München (DE)**

# (54) OPTICAL INFORMATION RECORDING MEDIUM AND METHOD FOR MANUFACTURING SAME

(57) The present invention provides an optical information recording medium having a substrate, a recording layer, and a reflective layer, and including a region corresponding to a burst cutting area: wherein the region has a plurality of bar recorded portions and a plurality of non bar recorded portions; and the ratio (A/B) of transmittance (A) with which the bar recorded portions transmit laser light for use in information reproduction to transmittance (B) with which the non bar recorded portions transmit the laser light is 1.5 or greater.

The present invention also provides a method of manufacturing the optical information recording medium, the method including: irradiating a region corresponding to a burst cutting area with laser light having a wavelength of 400 to 2000 nm and a recording power of 0.1 to 20 W at a linear velocity of 0.01 to 5 m/s to form a plurality of bar recorded portions in the region.

FIG. 1

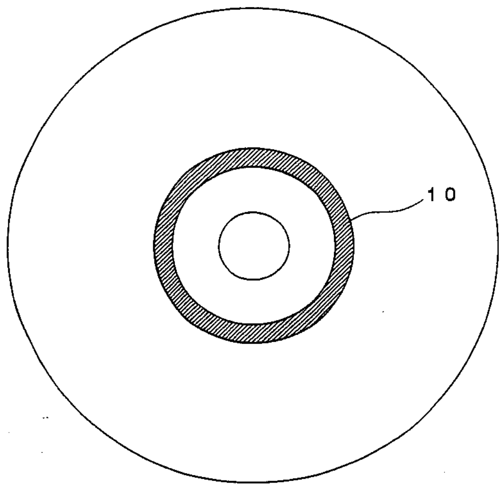


EP 1 811 516 A1

**Description**

Technical Field

The present invention relates to an optical recording medium and a manufacturing method thereof. In particular, the present invention relates to an optical recording medium having a region corresponding to a burst cutting area, and a manufacturing method thereof.

Background Art

Recently, optical recording media of higher recording densities have been sought after. In response to such demands, recordable Digital Versatile Disks (DVD-Rs) have already been put into practice.
Also, networks like the internet and high vision TVs recently have rapidly spread. Considering the broadcasting of HDTV (High Definition Television), demand is increasing more and more for large capacity recording media to inexpensively and simply record picture information.
DVD-Rs serve as high capacity recording media to a certain extent, but cannot be said to have recording capacity sufficient to cope with future demands. Thus, optical recording media (disks) having improved recording density and larger recording capacity by using laser beams with wavelengths shorter than those of laser beams used for DVD-Rs are being developed.
Along with such increasing of capacity of disks, technologies are desired for distribution of information recorded in the optical information recording media and prevention of unauthorized copies. That is, for security technologies, separately recording individual pieces of information is desired for optical information recording media.
In response to this demand, techniques for providing a Burst Cutting Area, hereinafter sometimes referred to as a BCA, or a region where barcodes are superimposed on pit portions of an optical information recording medium, and recording individual supplementary information in the optical information recording medium, such as information that is different for each medium and information relating to encoding keys/decoding keys (see, for example, Japanese Patent Application Laid Open (JP-A) Nos. 2002-133726, 2002-197670, 2002-208188, and 2003-196843) are generally applied to, for example read only optical information recording media.
Recording BCA signals in optical information recording media for which short wavelength laser beams are used, such as blue lasers, is being considered. As in DVD-Rs, one measure is recording BCA signals in the recording layer for recording user data. However, if BCA signals are recorded in only the recording layer, sufficient signal amplitude cannot be obtained in reproducing the recorded signals.

Disclosure of Invention

Subject Addressed by the Invention

Therefore, there is a need for an optical recording medium that makes it possible to obtain a high signal amplitude in reproducing BCA signals recorded in the optical information recording medium and a manufacturing method thereof.

Means of Solving the Subject

In order to meet the above need, as a result of dedicated research, the inventors have devised the following invention.
A first aspect of the invention provides an optical information recording medium having a substrate, a recording layer, and a reflective layer, and including a region corresponding to a burst cutting area: wherein the region has a plurality of bar recorded portions and a plurality of non bar recorded portions; and a ratio (A/B) of transmittance (A) with which the bar recorded portions transmit laser light for use in information reproduction to transmittance (B) with which the non bar recorded portions transmit the laser light is 1.5 or greater.
A second aspect of the invention provides a method of manufacturing the optical information recording medium described above, the method including: irradiating a region corresponding to a burst cutting area with laser light having a wavelength of 400 to 2000 nm and a recording power of 0.1 to 20 W at a linear velocity of 0.01 to 5 m/s to form a plurality of bar recorded portions in the region.

Effect of the Invention

According to the present invention, an optical recording medium that makes it possible to obtain high signal

amplitude in reproducing BCA signals recorded in the optical information recording medium, and a manufacturing method thereof may be provided.

Best Mode of Carrying Out the Invention

[Optical recording medium and manufacturing method thereof]

The optical information recording medium of the invention has a region corresponding to a so called burst cutting area (BCA) (hereinafter sometimes referred to as a "BCA corresponding region").

Here, the "BCA corresponding region" means, as shown in FIG. 1, a region (corresponding to numeral 10 in FIG. 1) for recording identification information of the optical information recording medium, formed in a DVD, and having a function similar to that of a BCA (Burst Cutting Area). The BCA corresponding region 10 is provided in different places depending on the type of medium. The BCA corresponding region is provided in the range from, for example, 22 mm to 24 mm from the center of the optical information recording medium.

Examples of supplementary information that can be recorded in the BCA corresponding region include: information designating authorized users; information designating time limitation of use; information designating the number of possible times of use; rental information; resolution information; information designating layers; information designating users; copyright owner information; copyright number information; manufacturer information; manufacturing date information; sale date information; shop or seller information; application set number information; information designating regions; information designating language; information designating usage; information designating product user; and information designating product number.

When the above supplementary information is reproduced, the optical information recording medium of the invention can achieve the same level of reliability (for example, reliability to prevention of illegal copying) as the reliability of conventional optical information recording media.

The BCA corresponding region of the optical information recording medium of the invention has plural bar recorded portions and non bar recorded portions, the bar recorded portions being formed in a barcode shape in the circumferential direction of the optical information recording medium. The bar recorded portions, which will be explained later, are portions in which holes are formed by removing a portion of the recording layer and the reflective layer by irradiating a laser beam, and portions that are not the bar recorded portions are the non bar recorded portions.

Since a recording layer and a reflective layer are not present at the bar recorded portions, but there is a recording layer and a reflective layer at the non bar recorded portions, the transmittance of the bar recorded portion and that of the non bar recorded portions are different. In the optical information recording medium of the invention of the ratio (A/B) of transmittance (A) with which the bar recorded portions transmit laser light for use in information reproduction to transmittance (B) with which the non bar recorded portions transmit the laser light is 1.5 or greater. When the ratio is less than 1.5, the difference between the reflected light intensity of the laser light in the bar recorded portions and the reflected light intensity of the laser light in the non bar recorded portions is small, and it is difficult to distinguish the bar recorded portions and the non bar recorded portions. The ratio is preferably 2 or above, and more preferably 4 or above. Further, the upper limit of the ratio is preferably 10 or below, and more preferably 8 or below. Furthermore, the transmittance (A) is preferably 10 to 50%, and more preferably 10 to 40%.

The transmittance (A) of the bar recorded portions and the transmittance (B) of the non bar recorded portions are obtained as follows. First, before recording a barcode, the transmittance of a region in which the barcode will be sectionally recorded is measured with a spectrophotometer. This measurement value corresponds to the transmittance of the non bar recorded portions. Next, after recording the barcode, the transmittance of this region is measured. The transmittance of the bar recorded portions is calculated from the ratio of the surface area of the bar recorded portions to the surface area of the non bar recorded portions and the two measured values. These surface areas are estimated using an optical microscope.

The BCA corresponding region is provided by the following bar recorded portion forming process. First, a laminate body is made by forming a recording layer and a reflective layer on a substrate, and providing a transparent sheet or a protective substrate on the reflective layer. Next, while the laminate body is being rotated at a predetermined angular velocity, laser light (beams) is irradiated towards the reflective layer of a region that corresponds to Burst Cutting Area. The wavelength of the laser light is from 400 to 2000 nm, and the output power (power) of the laser light is from 0.1 to 20 W. When the wavelength and the output power are out of the respective ranges, which is not preferable, the shapes of the bar recorded portions and the non bar recorded portions deform, and thereby the reproducing waveform of the recorded signals deforms. The wave length of the laser light is preferably from 400 to 1000 nm, and more preferably from 600 to 850 nm. It is preferable that the output power of the laser light is from 0.3 to 10 W.

Since the power output of the laser light is higher than the power output of laser light usually used to record and reproduce information, the laser beam that has reached the recording layer breaks up and removes the recording layer at the irradiated portions, reaches the reflective layer, and removes the reflective layer. Due to this, as shown in

FIG. 2, void portions 45 where a recording layer 50 and a reflective layer 40 are not present are formed and therefore bar recorded portions are formed. When a recorded signal is reproduced from an optical information recording medium with bar recorded portions where a BCA signal is recorded not only in the recording layer 50 but also in the reflective layer 40, a more sufficient signal amplitude may be obtained than when a recorded signal is reproduced from an optical information recording medium where a BCA signal is recorded only in the recording layer. This is because almost no reproducing light is reflected in a region from which a reflective layer has been removed. In this way, by repeating laser light irradiation and non irradiation while the optical information recording medium is being rotated, plural bar recorded portions and plural non bar recorded portions may be formed in the form of bar cords.

In the bar recorded portion forming process, it is preferable that the size of the spot of the laser beam in the disk rotation tangential direction is 0.4 to 4 μm. It is preferable that the size of the spot of the laser beam in the disk radial direction is 20 to 100 μm. A laser beam irradiation device is preferably a semiconductor laser from the viewpoint of ease of control. Furthermore, recording of information is carried out at a predetermined angular velocity. When this angular velocity is converted to a linear velocity in a barcode region that is region in the radium range of 22 to 24 mm from the center of a disk which linear velocity is not dependent on the disk radius, the linear velocity during formation of the bar recorded portions of the optical information recording medium is preferably 0.01 to 5 m/s, more preferably 0.05 to 3 m/s, and still more preferably 0.1 to 1 m/s.

Except for having a recording layer and a reflective layer on a substrate, there is no other particular limitation to the configuration of the optical information recording medium of the invention. Specific examples of the configuration include the following embodiments.

(1) First configuration is configuration in which a reflective layer and a recording layer are formed on a substrate in that order, with a transparent sheet stuck to the recording layer via an adhesive layer. An optical information recording medium with such a configuration is, for example, a "Blue Ray Disk" which information is recorded in and reproduced from by laser light having a wavelength of 500 nm or below.

(2) Second configuration is configuration in which a recording layer and a reflective layer are formed on a substrate in that order, with a protective substrate (dummy substrate) stuck to the reflective layer via an adhesive layer. An optical information recording medium with such a configuration is, for example, an "HD DVD" which information is recorded in and reproduced from by laser light having a wavelength of 500 nm or below.

These configurations may have at least one intermediate layer such as a barrier layer, as needed.

The type of the optical information recording medium of the invention may be a read only, recordable, or rewritable type. However, it is preferably a recordable type. There is no particular limit to the type of recording, and examples of the type include phase change, magneto optical, and dye-containing types. However, the type of recording is preferably a dye-containing type.

The detail of an optical information recording medium, as shown in FIG. 2, having a reflective layer 40, a recording layer 50, a barrier layer 60, an adhesive layer 70, and a transparent sheet 70 on a disc-shaped substrate 30 having a central hole in that order which optical information recording medium serves as an example of the optical information recording medium of the invention and the manufacturing method of the optical information recording medium of the invention (excluding the bar recorded portion forming process) will be explained below.

Substrate

The material of the substrate of an optical information recording medium of the present invention may be selected from the various materials used for substrates in conventional optical information recording media.

Examples of the substrate material include glass; polycarbonate; acrylic resins such as polymethyl methacrylate; vinyl chloride resins such as polyvinyl chloride and vinyl chloride copolymer; epoxy resin; amorphous polyolefins; and polyesters; and combinations thereof.

The above materials may be used as films or rigid substrates. Among the above materials, polycarbonate is preferable from the viewpoints of humidity resistance, dimensional stability, and cost.

It is preferable that the thickness of the substrate is from 0.5 to 1.2 mm. Also, in order to achieve higher recording density, the track pitch of a groove formed on the substrate are preferably narrower than that formed on CD-Rs or DVD-Rs. In this case, the track pitch of the groove is preferably in the range of 200 to 400 nm, and more preferably in the range of 250 nm to 350 nm. The depth of the groove is preferably in the range of 20 to 150 nm, and more preferably in the range of 50 to 100 nm.

The width of the groove is preferably in the range of 50 to 250 nm, and more preferably in the range of 100 to 200 nm. The inclination angle of the groove is preferably in the range of 20 to 80°, and more preferably in the range of 30 to 70°.

In the case of a Blue Ray Disk, the above dimensions are defined as those shown in the cross-section of FIG. 3 schematically showing the shape of the groove. The depth D of the groove is the distance between the surface of the substrate before groove formation and the deepest position of the groove, and the width W of the groove is the width of the groove at a depth of D/2, and the inclination angle θ of the groove is the angle made between the substrate surface and a straight line connecting a point of the groove which point is at a depth of D/10 from the surface of the substrate before groove formation with a point of the groove which point is at a height of D/10 from the deepest portion of the groove. These values may be measured with an AFM (atomic force microscope).

An undercoat layer may be provided between the surface of the substrate (the face in which the grooves are formed) and the recording layer in order to improve the surface flatness and adhesion force and prevent degradation of the recording layer.

Examples of the material(s) of the undercoat layer include polymer materials such as polymethyl methacrylate, acrylic acid/methacrylic acid copolymer, styrene/maleic acid anhydride copolymer, polyvinyl alcohol, N-methylolacrylamide, styrene/vinyltoluene copolymer, chlorosulphonated polyethylene, nitrocellulose, polyvinyl chloride, chlorinated polyolefins, polyester, polyimide, vinyl acetate/vinyl chloride copolymer, ethylene/vinyl acetate copolymer, polyethylene, polypropylene, polycarbonate; and surface improving agents such as a silane coupling agent. The undercoat may be formed by dissolving or dispersing the above material(s) in an appropriate solvent to prepare a coating liquid, and coating the coating liquid onto the surface of a substrate by such coating methods as spin coating, dip coating, or extrusion coating. The thickness of the undercoat layer is generally in the range of 0.005 to 20μm, and is preferably in the range of from 0.01 to 10μm.

Reflective layer

A reflective layer is formed for the purpose of improving reflectance during reproduction of information. In the optical information recording medium of the invention, it is preferable that the reflective layer is adjacent to the recording layer. A light reflective substance serves as the material of the reflective layer is a substance with high reflectance to laser light. Examples thereof include metals and semi-metals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi, and stainless steel. One of these substances may be used alone or two or more of them may be used as a combination or an alloy. The light reflective substance is preferably Cr, Ni, Pt, Cu, Ag, Au, Al or stainless steel, and more preferably Au metal, Ag metal, Al metal or an alloy thereof, and most preferably Ag or Ag alloy (for example, Ag-Pd-Cu), or Al or Al alloy. The reflective layer may be formed, for example, by vapor deposition, sputtering, or ion plating of the light reflective substance (s) onto a substrate or onto a recording layer. The thickness of the reflective layer is generally in the range of 10 to 300 nm, and is preferably in the range of 50 to 200 nm.

Recording layer

It is preferable that the recording layer formed on the substrate or on the reflective layer is a dye-containing recording layer. However, the recording layer is not limited thereto. Therefore, examples of the recording material(s) contained in the recording layer included organic compounds such as dyes and phase changing metal compounds.

Specific examples of the organic compounds include cyanine dyes, oxonol dyes, metal complex dyes, azo dyes, and phthalocyanine dyes.

Furthermore, dyes disclosed in JP-A Nos. H04-74690, H08-127174, H11-53758, H11-334204, H11-334205, H11-334206, H11-334207, 2000-43423, 2000-108513 and 2000-158818 are preferably used.

As aforementioned, the recording material is not limited to dyes. Other organic compounds such as triazole compounds, triazine compounds, cyanine compounds, merocyanine compounds, aminobutadiene compounds, phthalocyanine compounds, cinnamic acid compounds, viologen compounds, azo compounds, oxonol benzoxazole compounds, or benzotriazole compounds are also preferably used. Among these compounds, cyanine compounds, aminobutadiene compounds, benzotriazole compounds, and phthalocyanine compounds are preferable.

The recording layer is formed, for example, by dissolving the recording material(s) such as a dye, and a binder in a suitable solvent to prepare a coating liquid, applying the coating liquid onto a substrate to form a coating film, and drying the coating film. The concentration of the recording material(s) in the coating liquid is generally in the range of 0.01 to 15 mass %, preferably 0.1 to 10 mass %, more preferably 0.5 to 5 mass %, and still more preferably 0.5 to 3 mass %.

The recording layer may be formed, for example, by vapor deposition, sputtering, CVD, or solvent coating, but is preferably formed by solvent coating. In such a case, the recording layer may be formed by dissolving the dye, and, if necessary, a quencher and a binder in a solvent to prepare a coating liquid, applying the coating liquid onto a substrate surface to form a coating film and drying the coating film.

Examples of the solvent(s) of the coating liquid include esters such as butyl acetate, ethyl lactate, and cellosolve acetate; ketones such as methyl ethyl ketone, cyclohexanone, and methyl isobutyl ketone; chlorinated hydrocarbons

such as dichloromethane, 1,2-dichloroethane, and chloroform; amides such as dimethylformamide; hydrocarbons such as methylcyclohexane; ethers such as dibutyl ether, diethyl ether, tetrahydrofuran, and dioxane; alcohols such as ethanol, n-propanol, iso-propanol, n-butanol, and diacetone alcohol; fluorinated solvents such as 2,2,3,3-tetrafluoropropanol; and glycol ethers such as ethylene glycol monomethyl ether, ethylene glycol monoethyl ether, and propylene glycol monomethyl ether.
One of the above solvents may be used alone or two or more of them can be used together in consideration of the solubility of the dye used. The coating liquid may further contain various additives such as an antioxidant, a UV absorbent, a plasticizer, and/or a lubricant according to the application.

When a binder is included in the coating liquid, examples thereof include natural organic polymer materials such as gelatin, cellulose derivatives, dextran, rosins, and rubbers; and synthetic organic polymers including hydrocarbon resins such as polyethylene, polypropylene, polystyrene, and polyisobutylene, vinyl resins such as polyvinyl chloride, polyvinylidene chloride, and vinyl chloride/vinyl acetate copolymer, acrylic resins such as polymethyl acrylate and polymethyl methacrylate, polyvinyl alcohol, chlorinated polyethylene, epoxy resin, butylal resin, rubber derivatives, and initial condensates of thermosetting resins such as phenol/formaldehyde resins.

When a binder is included in the recording layer, the amount of the binder used (by mass) is generally in the range of 0.01 to 50 times, and preferably 0.1 to 5 times the mass of the dye.

Examples of the coating method in the solvent coating include spraying, spin coating, dipping, roll coating, blade coating, doctor roll coating, and screen printing. The recording layer may be either mono-layered or multilayered. The thickness of the recording layer is generally in the range of 10 to 500 nm, preferably 15 to 300 nm, and more preferably 20 to 150 nm.

The recording layer may contain a discoloration inhibitor to improve the light fastness of the recording layer. Generally, a singlet-oxygen quencher is used as the discoloration inhibitor. As the singlet-oxygen quencher, one or more of those disclosed in references such as patent specifications may be used. Specific examples thereof include those described in JP-A Nos. S58-175693, S59-31194, S60-18387, S60-19586, S60-19587, S60-35054, S60-36190, S60-36191, S60-44554, S60-44555, S60-44389, S60-44390, S60-54892, S60-47069, S68-209995, and H04-25492, Japanese Patent Application Publication (JP-B) Nos. H01-38680 and H06-26028, German Patent No. 350399, and page 1141 of the Journal of the Chemical Society of Japan, October 1992.

The amount of the discoloration inhibitor used such as the singlet oxygen quencher is usually in the range of 0.1 to 50 mass %, preferably in the range of 0.5 to 45 mass %, more preferably in the range of 3 to 40 mass %, and still more preferably in the range of 5 to 25 mass % relative to the mass of the dye.

Barrier Layer

A barrier layer may be provided in the optical information recording medium of the invention in order to physically and chemically protect the reflective layer and the recording layer. When the optical information recording medium has a configuration in which two substrates (one of which may be a protective substrate) are bonded to each other in such a manner that the recording layer is disposed as an internal layer, it is not always necessary to provide a barrier layer.

Examples of the materials that may be used for the barrier layer include: inorganic materials such as ZnS, ZnS-$SiO_2$, SiO, $SiO_2$, $MgF_2$, $SnO_2$, and $Si_3N_4$; and organic materials such as thermoplastic resins, thermosetting resins, and UV curable resins. The barrier layer may be formed by, for example, laminating a film obtained by a plastic extrusion process onto the reflective layer or the recording layer via an adhesive layer. Alternatively, the barrier layer may be provided by vacuum vapor deposition, sputtering or coating.

When the material of the barrier layer is a thermoplastic resin or a thermosetting resin, the barrier layer may be formed by dissolving such a resin in a suitable solvent to prepare a coating liquid, coating the coating liquid and drying the obtained film. When the material of the barrier layer is a UV curable resin, the barrier layer may be formed by coating the resin itself or a coating liquid obtained by dissolving the resin in a suitable solvent onto the recording layer or the reflective layer, and irradiating the obtained film with UV light to cure the film. Depending on the purpose, additives may be included in the coating liquid, such as an antistatic agent, an antioxidant and/or a UV absorbing agent. The thickness of the protective layer is generally between 0.1 $\mu$m and 1 mm.

Adhesive Layer

An adhesive layer is an optional layer that may be formed in order to increase the adhesiveness of the reflective layer, the recording layer or the barrier layer to a protective substrate or a transparent sheet.
A photocurable resin is preferable as the material of the adhesive layer. In order to prevent warping of the disk, the photocurable resin preferably has a small hardening shrinkage ratio. Such a photocurable resin is, for example, a UV-curable resin (UV-curable adhesive) such as "SD-640" and "SD-347" manufactured by Dainippon Ink and Chemicals, Incorporated. In order to obtain adhesive strength with elasticity, the thickness of the adhesive layer is preferably in the

range of 1 to 1000 μm, more preferably in the range of 5 to 500 μm, and still more preferably in the range of 10 to 100 μm. As will be explained later, when a transparent sheet is used that has been coated with a pressure-sensitive adhesive, the layer of the pressure-sensitive adhesive serves as the adhesive layer.

Transparent Sheet

A transparent sheet is used to protect the optical information recording medium from internal contamination, scratches and shock or prevent the penetration of moisture into the optical information recording medium. In particular, the transparent sheet is used as the surface layer of a blue-ray disk. The material of the transparent sheet are not particularly limited, as long as it is transparent. However, the material is preferably polycarbonate or cellulose triacetate, and more preferably a material having a moisture absorption rate of 5% or less at 23°C at 50% RH. Here, the meaning of "transparent" is capability of transmitting recording light and reproducing light (transmittance of 90% or above).
Laminating of a transparent sheet onto a recording layer, a reflective layer, or a barrier layer, may be carried out, for example, in the following way. A coating liquid may be prepared by dissolving a photocurable resin serving as an adhesive in a suitable solvent. The coating liquid is applied onto a recording layer, a reflective layer, or a barrier layer at a predetermined temperature to form a coating film. A cellulose triacetate film (TAC film) obtained, for example, by a plastic extrusion process is laminated onto the coating film. The resultant laminated body is irradiated through the TAC film to cure the coating film. It is preferable that the TAC film includes at least one ultraviolet absorbent. The thickness of the transparent sheet is preferably in the range of 0.01 to 0.2 mm, more preferably 0.03 to 0.1 mm, and still more preferably 0.05 to 0.095 mm.
A polycarbonate sheet may be used as the transparent sheet. A light transmission layer obtained by using, for example, a UV curable resin may be provided in place of the transparent sheet.
In order to control the viscosity of the coating liquid, the coating temperature is preferably in the range of from 23 to 50°C, more preferably in the range from 24 to 40°C, and even more preferably in the range from 25 to 37°C. In order to prevent warping of the disk, it is preferable that irradiation of ultraviolet light to the coating film is carried out with a pulse irradiator (preferably an ultraviolet irradiator). The interval between pulses is preferably 1 msec or below, and more preferably 1 μsec or below. The amount of a single pulse irradiated is not particularly limited, but it is preferably 3 $kW/cm^2$ or less, and more preferably 2 $kW/cm^2$ or less. There is no particular limit to the number of times of irradiation, but the number of times is preferably 20 times or less, and more preferably 10 times or less.
When a pressure-sensitive adhesive is in advance to the surface of the transparent sheet which surface is a face to be laminated, it is unnecessary to coat a layer of adhesive onto the recording layer, the reflective layer, or the barrier layer.

Protective Substrate

When the optical information recording medium of the invention is an HD DVD, a protective substrate is provided in place of the transparent sheet. In this case, the thicknesses of each of the protective substrate and substrate are from about 0.4 to 0.7 mm. The protective substrate may be made of the same material(s) as the substrate, and may have the same shape as the shape of the substrate.
The optical information recording medium of the invention may be applied to an optical information recording medium with recording portions (pits) where information that is reproduced using laser light is recorded, a so-called read-only medium.

[Optical Information Recording and Reproducing Method]

For example, a method for recording optical information in the optical information recording medium of the invention may be carried out as follows. First, while the optical information recording medium is being rotated at a constant linear velocity or angular velocity, light for recording, such as semiconductor laser light, is irradiated onto the medium from the substrate side or from the transparent sheet side. The exposed portions of the recording layer absorb the irradiated light, resulting in locally raising of the temperature of the recording layer, which generates physical or chemical changes in the exposed portions (for example, generating pits), causing changes in the optical properties. As a result, information is recorded.
As the laser light for recording and reproduction, semiconductor laser light having an oscillating wavelength preferably in the range of 500 nm or less, and more preferably in the range of from 390 to 440 nm, may be used. The recording and reproduction light is preferably blue-violet semiconductor laser light with an oscillation wavelength in the range of 390 to 415 nm, or blue-violet SHG laser light having a central oscillation wavelength of 425 nm or 410 nm and obtained by halving the wavelength of infrared semiconductor light with a central oscillation wavelength of 850 nm or 820 nm by an optical waveguide element. From the viewpoint of recoding density, blue-violet semiconductor laser light is more preferably used. Information recorded in the above manner may be reproduced by, while rotating the optical

information recording medium at the same linear velocity as when recording, irradiating the medium from the substrate or the transparent sheet side with semiconductor laser light and detecting the reflected light.

[Examples]

The invention will be explained more specifically by using the following Examples, but the invention is not limited to these Examples.

[Example 1]

A grooved substrate having a thickness of 1.1 mm (external diameter of 120 mm and internal diameter of 15 mm) was made by extrusion molding of polycarbonate resin (PANLITE AD5503) manufactured by Teijin Chemicals Ltd. The track pitch, the half breadth, and the depth of the substrate groove were 340 nm, 150 nm and 35 nm, respectively. The inclination angle of the groove measured with an AFM was 57°.

The depth ("D" in FIG. 3) of the groove is derived by measuring the depth of each of the deepest portion and the shallowest portion of the groove, and averaging the measure values. The width ("W" in FIG. 3) of the groove is the measured value of the width at a depth that is the half of the depth of the groove. The inclination angle ("θ" in FIG. 3) of the groove was derived by measuring the angle between the substrate surface and a straight line connecting a point on the groove at a depth of D/10 from the surface of the substrate before the groove was formed with a point on the groove at a height of D/10 from the deepest portion of the groove.

A reflective layer having a thickness of 100 nm was formed on the substrate by DC sputtering a target (APC) of 98.1 parts by mass of silver, 0.9 parts by mass of palladium and 1.0 part by mass of copper in an Ar atmosphere. At this time, the input power was 2 kW, and the Ar flow amount was 5 sccm. The film thickness was controlled by adjusting the sputtering time. A CUBE sputtering device manufactured by Unaxis was used in the DC sputtering.

A liquid with an organic dye concentration of 2 g/100 ml was prepared by dissolving 2g of an organic dye represented by the following chemical formula in 100 ml of TFP (2,2,3,3-tetrafluoropropanol). After irradiating ultrasonic wave to this liquid for 2 hours to sufficiently dissolve the organic dye therein, the liquid was left to stand for at least 0.5 hours in an environment of 23°C and 50% RH. Then, the liquid was filtered with a filter having a pore size of 0.2 μm. The liquid after the filtration was coated onto the reflective layer by a spin coating method to form a recording layer. The thickness of the recording layer at the groove portion was 100 nm and that at the land portion was 70 nm.

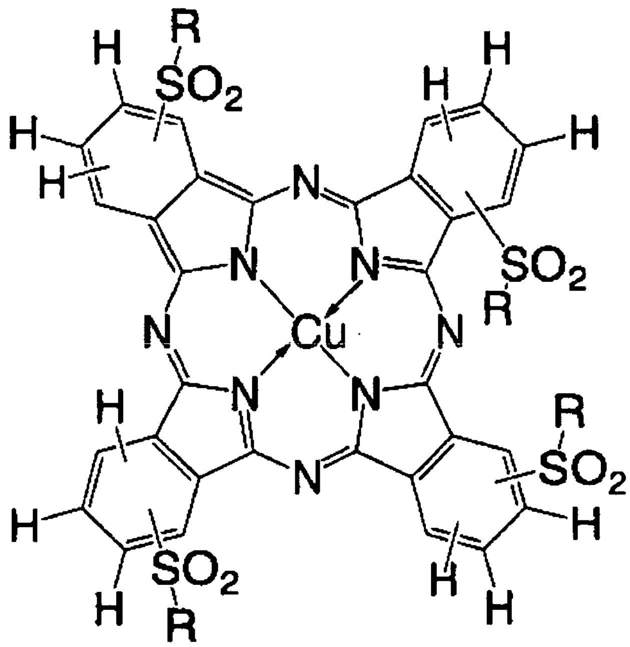

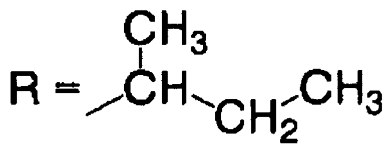

After forming the recording layer, the resultant laminated body was heated for one hour in a clean oven kept at 40°C. The substrate was supported by a vertical stack pole during the heating.
After the heating, a barrier layer having a thickness of 50 nm was formed on the recording layer by RF sputtering a target of 8 parts by mass of ZnS and 2 parts by mass of $SiO_2$. During the sputtering, the power was 4 kW, and the pressure was 2 x $10^{-2}$ mbar, and the time was 10 seconds.

A polycarbonate film having a thickness of 80 μm (internal diameter of 15 mm, and external diameter of 120 mm) and serving as a transparent sheet was coated with a pressure-sensitive adhesive, and the obtained was laminated onto the barrier layer. After the laminating, the adhesive layer made of the pressure-sensitive adhesive had a thickness of 20 μm.

While the obtained disk-shaped laminated body was being rotated at a liner velocity of 0.23 m/s, laser light (wavelength of 810 nm; spot size in the disk rotation tangential direction of 1 μm; spot size in the disk radial direction of 70 μm; and power output of 2.0 W) was irradiated from the transparent sheet side towards the BCA corresponding region of the reflective layer to form bar recorded portions for generating BCA signals, and an optical information recording medium was thereby produced.

To irradiate the laser light, a repeating pulse with duration of emissions of 2.2 μ seconds and non emission duration between emissions of 8.6 μ seconds was used. Also, in the bar recorded portions, for each rotation of the disk, the converging position of the laser light was shifted at a pitch of 10 μm from the internal diameter toward the external diameter, and 4648 BCA signals with a length in the disk rotational tangential direction of 6 μm and a length in the disk radial direction of 40 μm were recorded. The BCA corresponding region was in a radius range of 21.3 mm to 22 mm from the center of the disk.

The bar recorded portions and the non bar recorded portion have a BCA corresponding region, and the transmittance of the bar recorded portions (A) and the transmittance of the non bar recorded portions (B) were obtained by the aforementioned method, and the ratio of (A/B) was obtained. The results are shown in Table 1. The wavelength of the laser light in measuring the transmittance was the same as that of laser light for information reproduction and was 405 nm.

Reproduction of the recorded BCA signals was carried out as follows, and the amplitude and degree of modulation of the BCA signals were obtained. The optical information recording medium was set in a DDU-1000 device manufactured by Pulstec Industrial Co., Ltd., and the medium signals were introduced into an oscilloscope, the intensity

of signals obtained from the non bar recorded portions (X) and the intensity of signals obtained from the bar recorded portions (Y) were measured, and the degree of modulation was calculated from the obtained measurement values, and the following formula (1) and formula (2). The results are shown in Table 1.

$$\text{Formula (1): “BCA signal amplitude”} = |X - Y|$$

$$\text{Formula (2): “Degree of modulation”} = \text{“BCA signal amplitude”}/X$$

[Example 2]

An optical information recording medium in which a BCA corresponding region was formed was prepared, and the ratio (A/B) of the transmittance of the bar recorded portions (A) of the optical information recording medium to the transmittance of the non bar recorded portions (B) and the degree of modulation were obtained in the same manner as in Example 1, except that the power output of the laser light was changed to 1.5 W. The results are shown in Table 1.

[Example 3]

An optical information recording medium in which a BCA corresponding region was formed was prepared, and the ratio (A/B) of the transmittance of the bar recorded portions (A) of the optical information recording medium to the transmittance of the non bar recorded portions (B) and the degree of modulation were obtained in the same manner as in Example 1, except that the linear velocity in rotating the disk was changed to 2.4 m/s. The results are shown in Table 1.

[Example 4]

An optical information recording medium in which a BCA corresponding region was formed was prepared, and the ratio (A/B) of the transmittance of the bar recorded portions (A) of the optical information recording medium to the transmittance of the non bar recorded portions (B) and the degree of modulation were obtained in the same manner as in Example 1, except that the wavelength of the laser light in forming the bar recorded portions was changed to 670 nm, that the spot size in the disk rotation radial direction was changed to 40 $\mu$m, that the power output of the laser light was changed to 0.5 W, and that the disk was rotated at a linear velocity of 0.10 m/s. The results are shown in Table 1.

[Example 5]

An optical information recording medium in which a BCA corresponding region was formed was prepared, and the ratio (A/B) of the transmittance of the bar recorded portions (A) of the optical information recording medium to the transmittance of the non bar recorded portions (B) and the degree of modulation were obtained in the same manner as in Example 1, except that the power output of the laser light was changed to 0.4 W. The results are shown in Table 1.

[Example 6]

An optical information recording medium in which a BCA corresponding region was formed was prepared, and the ratio (A/B) of the transmittance of the bar recorded portions (A) of the optical information recording medium to the transmittance of the non bar recorded portions (B) and the degree of modulation were obtained in the same manner as in Example 1, except that the power output of the laser light was changed to 0.2 W. The results are shown in Table 1.

[Comparative Example 1]

An optical information recording medium in which a BCA corresponding region was formed was prepared, and the ratio (A/B) of the transmittance of the bar recorded portions (A) of the optical information recording medium to the transmittance of the non bar recorded portions (B) and the degree of modulation were obtained in the same manner as in Example 1, except that the linear velocity in rotating the disk was changed to 6 m/sec. The results are shown in Table 1.

[Comparative Example 2]

An optical information recording medium in which a BCA corresponding region was formed was prepared, and the ratio (A/B) of the transmittance of the bar recorded portions (A) of the optical information recording medium to the transmittance of the non bar recorded portions (B) and the degree of modulation were obtained in the same manner as in Example 1, except that the power output of the laser light in forming the bar recorded portions was changed to 0.05 W. The results are shown in Table 1.

Table 1

| | Transmittance of Bar Recorded Portions (A) % | Transmittance of Non Bar Recorded Portions (B) % | A/B | Degree of Modulation |
|---|---|---|---|---|
| Example 1 | 40 | 5 | 8 | 0.96 |
| Example 2 | 28 | 5 | 5.6 | 0.80 |
| Example 3 | 18 | 5 | 3.6 | 0.30 |
| Example 4 | 30 | 5 | 6 | 0.90 |
| Example 5 | 25 | 5 | 5 | 0.80 |
| Example 6 | 20 | 5 | 4 | 0.40 |
| Comparative Example 1 | 6 | 5 | 1.2 | 0.08 |
| Comparative Example 2 | 6 | 5 | 1.2 | 0.06 |

It can be seen that, from the A/B ratio of Examples of the table, sufficient degree of modulation is obtained, but in the Comparative Examples the degree of modulation is extremely small.

Brief Explanation of the Drawings

FIG. 1 is a plan view showing an example of the optical information recording medium according to the invention.
FIG. 2 is a partial cross-section showing an example of the layer configuration of the optical information recording medium of the invention.
FIG. 3 is a partial cross-section for explaining the shape of a groove formed in a substrate.

Explanation of the Identification Numerals

10 BCA CORRESPONDING REGION
30 SUBSTRATE
40 REFLECTIVE LAYER
45 VOID PORTIONS (BAR RECORDED PORTIONS)
50 RECORDING LAYER

## Claims

**1.** An optical information recording medium comprising a substrate, a recording layer, and a reflective layer, and including a region corresponding to a burst cutting area:

wherein the region comprises a plurality of bar recorded portions and a plurality of non bar recorded portions; and a ratio (A/B) of transmittance (A) with which the bar recorded portions transmit laser light for use in information reproduction to transmittance (B) with which the non bar recorded portions transmit the laser light is 1.5 or greater.

**2.** A method of manufacturing the optical information recording medium of claim 1, the method comprising: irradiating a region corresponding to a burst cutting area with laser light having a wavelength of 400 to 2000 nm and a recording power of 0.1 to 20 W at a linear velocity of 0.01 to 5 m/s to form a plurality of bar recorded portions in the region.

FIG. 1

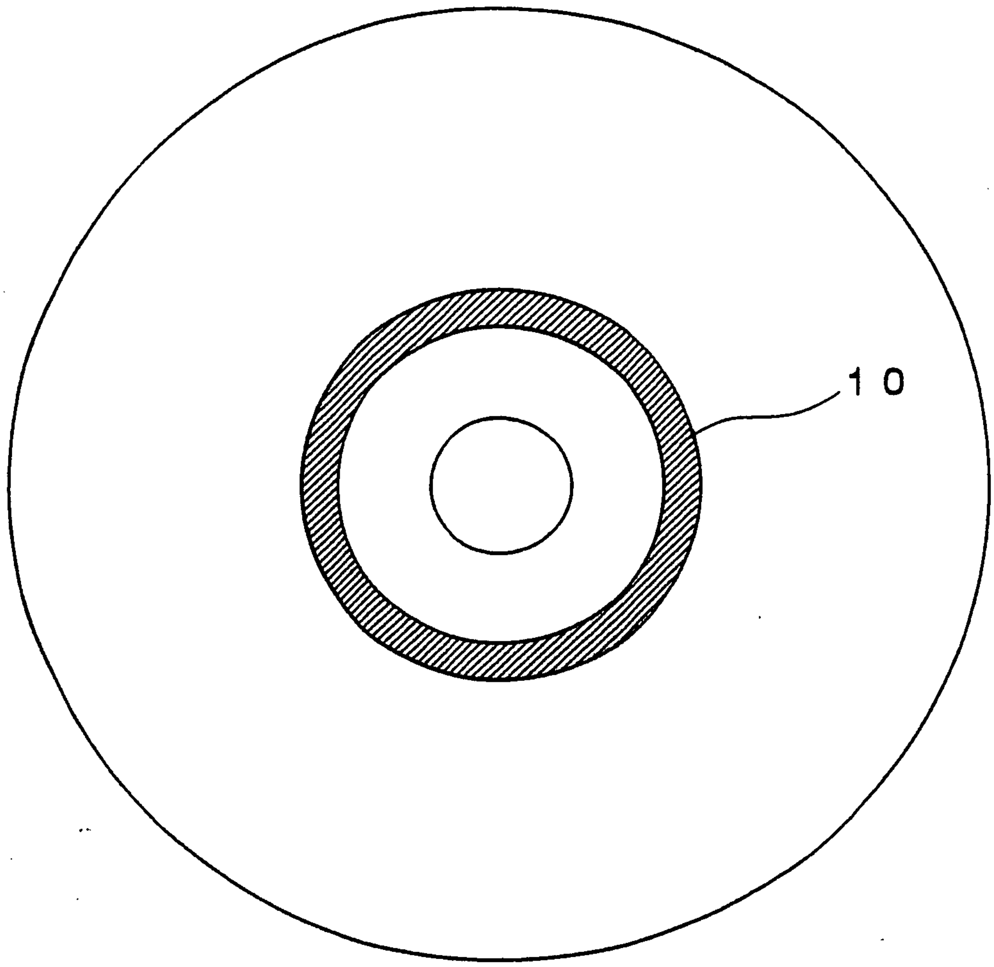

FIG. 2

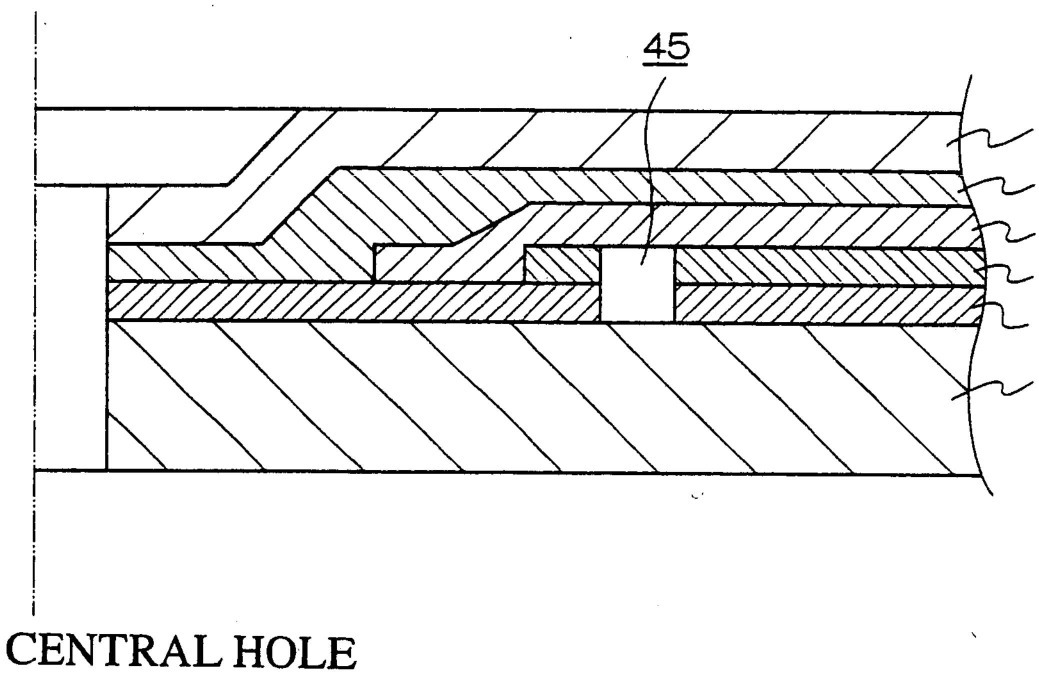

F I G. 3

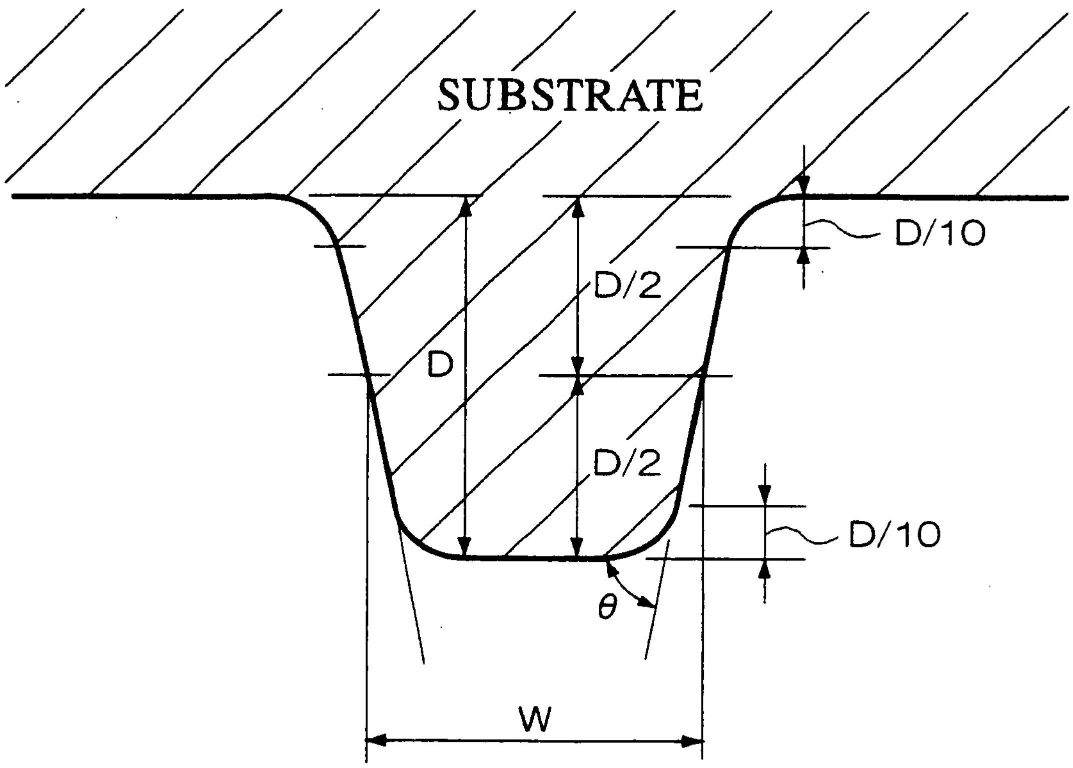

**INTERNATIONAL SEARCH REPORT**

International application No.
PCT/JP2005/019117

A. CLASSIFICATION OF SUBJECT MATTER
*G11B7/24*(2006.01), *G11B7/0045*(2006.01), *G11B7/007*(2006.01), *G11B7/125*(2006.01), *G11B7/26*(2006.01)

According to International Patent Classification (IPC) or to both national classification and IPC

B. FIELDS SEARCHED

Minimum documentation searched (classification system followed by classification symbols)
G11B7/0045, G11B7/007, G11B7/125, G11B7/24, G11B7/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2001-243636 A (Matsushita Electric Industrial Co., Ltd.), 07 September, 2001 (07.09.01), Par. Nos. [0002] to [0005], [0022] to [0023], [0030] to [0045], [0057] to [0071] & JP 2001-229542 A & JP 2001-243634 A & JP 2001-243635 A & JP 3271965 B & US 2005/0163009 A & US 2005/0163027 A & US 2005/0163028 A & US 2005/0163030 A & EP 1152402 A1 & WO 01/06502 A1 & CN 1321301 A & TW 470946 B | 1-2 |
| A | JP 2002-133726 A (Sharp Corp.), 10 May, 2002 (10.05.02), Full text; all drawings (Family: none) | 1-2 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 January, 2006 (13.01.06) | 24 January, 2006 (24.01.06) |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2005/019117

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-15466 A (Pioneer Electronic Corp.), 18 January, 2002 (18.01.02), Full text; all drawings (Family: none) | 1-2 |
| A | JP 10-188361 A (Victor Company Of Japan, Ltd.), 22 July, 1998 (22.07.98), Full text; all drawings (Family: none) | 1-2 |
| A | JP 2004-192766 A (Hitachi Maxell, Ltd.), 08 July, 2004 (08.07.04), Full text; all drawings (Family: none) | 1-2 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002133726 A
- JP 2002197670 A
- JP 2002208188 A
- JP 2003196843 A
- JP H0474690 A
- JP H08127174 A
- JP H1153758 A
- JP H11334204 A
- JP H11334205 A
- JP H11334206 A
- JP H11334207 A
- JP 2000043423 A
- JP 2000108513 A
- JP 2000158818 A
- JP S58175693 A
- JP S5931194 A
- JP S6018387 A
- JP S6019586 A
- JP S6019587 A
- JP S6035054 A
- JP S6036190 A
- JP S6036191 A
- JP S6044554 A
- JP S6044555 A
- JP S6044389 A
- JP S6044390 A
- JP S6054892 A
- JP S6047069 A
- JP S68209995 A
- JP H0425492 A
- JP H0138680 B
- JP H0626028 B
- DE 350399


### Non-patent literature cited in the description


- *Journal of the Chemical Society of Japan,* October 1992, 1141